# EUROPEAN PATENT APPLICATION

(11) **EP 2 315 497 A1**
(43) Date of publication of application: **27.04.2011**
(21) Application number: 09252396.8
(22) Date of filing: 09.10.2009
(51) Int. Cl.: H05B 33/08, H02M 1/42

(54) **An LED driver circuit having headroom/dropout voltage control and power factor correction**

(71) Applicant: NXP B.V., 5656 AG Eindhoven (NL)
(72) Inventor: Schmid, Markus, Redhill, Surrey RH1 1DL (GB); Kuebrich, Johann Baptist Daniel, Redhill, Surrey RH1 1DL (GB); Duerbaum, Thomas Antonius, Redhill, Surrey RH1 1DL (GB); Pansier, Frans, Redhill, Surrey RH1 1DL (GB); Halberstadt, Hans, Redhill, Surrey RH1 1DL (GB); Hoogzaad, Gian, Redhill, Surrey RH1 1DL (GB)
(74) Representative: Hardingham, Christopher Mark

(57) **Abstract**

A driver circuit (602) for one or more light emitting diodes (618) comprising a controllable power factor correction circuit (610) configured to receive a rectified alternating voltage and generate a PFC output voltage (612), and a linear regulator (616) configured to receive the PFC output voltage (612) and a current mode control signal (626), and generate an LED driver output voltage (620) with a substantially constant current in accordance with the current mode control signal (626). The driver circuit (602) further comprising a headroom control component (616) configured to generate a headroom control signal (608) representative of an excess voltage. The controllable power factor correction circuit (610) is configured to receive the headroom control signal (608) and adjust one or more parameters of the power factor correction circuit (610) in accordance with the headroom control signal (608) in order to adjust the PFC output voltage (612).

## Description

The present disclosure relates to the field of driver circuits, and in particular driver circuits for one or more light emitting diodes.

Light emitting diodes are known to be used in general illumination applications as a replacement for the more traditional light bulbs and fluorescent lamps. When compared with a traditional light bulb, an LED can provide a high luminous efficacy in combination with a long lifetime. Such light emitting diodes (LEDs) cannot be driven directly from a mains voltage supply because large current values would result due to the small dynamic resistance of LEDs and the fact that LEDs typically require a voltage level of about 1.5 volts to 5 volts for operation. The voltage level of an LED can vary according to the colour, type, temperature, age and operation conditions of the LED. However, even for the same diode type, the forward voltage is known to differ significantly at the same forward current for different batches of diodes.

Circuitry, which may also be known as ballast, is known to generate a suitable DC voltage or current from a mains supply for operating one or more LEDs.

GB 2 443 091 (Radiant Research Limited) discloses a system for controlling solid state lighting that supplies any one of a range of AC or DC voltages to a plurality of LED light strings. Each LED string has a sensor that monitors the voltage across a switching device in an LED driver circuit and utilises a control unit to control the voltages supplied by the power supply through control signals in response to the monitored switching device voltage. The control system for each LED channel can vary the voltage provided by a corresponding transformer by predetermined upper and lower levels or minimum voltage steps.

WO 2008/022270 (Dialight Corporation) discloses a method and apparatus for controlling an input voltage to a light emitting diode. A control circuit is coupled to a current regulator for controlling a power supply providing an input voltage to an energy storage device, wherein the input voltage is provided in accordance with an amount of a headroom voltage measured across a current regulator.

US 2006/0186830 (Shami et al) discloses automatic voltage selection for series driven LEDs. A battery voltage can be boosted to a selected drive voltage level connected to current sources for driving LED loads.

The listing or discussion of a prior published document or any background in the specification should not necessarily be taken as an acknowledgement that the document or background is part of the state of the art or is common general knowledge.

According to a first aspect of the invention, there is provided a driver circuit for one or more light emitting diodes comprising:
a controllable power factor correction circuit configured to receive a rectified alternating voltage and generate a PFC output voltage;
a linear regulator configured to receive the PFC output voltage and a current mode control signal, and generate an LED driver output voltage with a substantially constant current in accordance with the current mode control signal; and
a headroom control component configured to generate a headroom control signal representative of an excess voltage;
wherein the controllable power factor correction circuit is configured to receive the headroom control signal and adjust one or more parameters of the power factor correction circuit in accordance with the headroom control signal in order to adjust the PFC output voltage.

Adjusting the PFC output voltage in this way can enable a more efficient and economical driver circuit to be provided. This can be because the headroom voltage that is required to ensure correct operation of the one or more light emitting diodes (LEDs) can be kept at a lower value than is possible with the prior art. The headroom voltage may be considered as the difference between the input and output voltage levels of the linear regulator. For example, the headroom voltage may not need to account for any variations in the operating conditions of the LEDs because any such variations can be automatically taken into account through use of the current mode control signal and/or headroom control signal.

The value of the LED driver voltage may be maintained so that it comprises a voltage that is used by the one or more LEDs and at least a minimum headroom voltage that is required to guarantee a constant driving current for the one or more LEDs. The minimum headroom voltage may be required for operation of the linear regulator.

The excess voltage may comprise: the difference between the PFC output voltage and the LED driver output voltage; or the sum of an offset voltage representative of the minimum headroom and the LED driver output voltage; or the amount of the LED driver output voltage (620) that is not used by the one or more light emitting diodes and the voltage sense or ballasting resistor. The offset voltage may be considered as a constant offset representative of the minimum headroom required to correctly operate the one or more LEDs, and may provide a relatively simple implementation as only the LED driver output voltage needs to be measured.

The linear regulator may comprise the headroom control component, or the headroom control component may be provided as a separate component to the linear regulator. The functionality of the headroom control component may be implemented into one or more of an integrated circuit (IC) that comprises the linear regulator and/or the PFC circuit, a control IC for the PFC, a separate headroom control IC, or a discrete solution/circuit.

The driver circuit may further comprise a rectifier configured to receive an AC voltage supply. The rectifier may be configured to generate the rectified alternating voltage for the controllable power factor correction circuit. The rectifier can enable the driver circuit to be connected directly to a mains/line supply, and can provide a driver circuit that is suitable for general lighting/illumination purposes such as providing light to a room in a building. The controllable power factor correction circuit may be configured to receive a rectified alternating voltage.

The AC voltage supply may be a mains supply, an emergency voltage supply, for example for emergency lighting, or any other AC voltage source such as those used on aeroplanes, for example.

The controllable power factor correction circuit may be further configured to adjust one or more parameters of the power factor correction circuit in accordance with the headroom control signal so that the excess voltage is reduced/minimized for correct operation of the linear regulator. The power factor correction circuit may adjust the one or more parameters of the power factor correction circuit so that the excess voltage tends towards a specific value such as the minimum operating voltage of the linear regulator or the minimum required output voltage of the PFC, or any other voltage that is required to ensure correct operation of the driver circuit.

The controllable power factor correction circuit may be further configured to adjust one or more parameters of the power factor correction circuit in accordance with the headroom control signal in order to maintain the excess voltage above a minimum value. The minimum value may be a minimum voltage that is required to ensure correct operation of the linear regulator. Ensuring that the excess voltage does not drop below the minimum value can ensure that the linear regulator is capable of providing the LEDs with a substantially constant current, thereby providing an acceptable quality and efficiency of light generation by the LEDs. In some embodiments, the controllable power factor correction circuit may be configured to maintain the excess voltage at a level that is close to a minimum value, without falling below the minimum value.

The controllable power factor correction circuit may be configured to adjust the switching frequency, on-time, off-time, duty cycle and/or peak current value of the operation of its switch in accordance with the headroom control signal and/or another signal such as the input voltage. Such a power factor correction circuit can provide an efficient conversion from the rectified alternating voltage to the PFC output voltage and may be necessary to satisfy legal standards/requirements in the future.

The driver circuit may further comprise one or more LEDs, and optionally a resistor, connected to the output of the linear regulator. The one or more LEDs may comprise one or more LED strings. The LEDs and optional resistor may be connected in series. The current mode control signal may be representative of the current flowing through the LEDs.

The substantially constant current provided by the linear regulator may be referred to as a DC current. Providing a DC current to an LED can improve the light output of the LEDs.

The PFC output voltage may comprise a ripple component. A certain ripple component is an inherent characteristic of the PFC operation, and may be necessary to ensure that one or more regulations in relation to lighting systems, such as current drawn from a mains/line supply, can be addressed. For example, in case of a perfect sinusoidal input current at a perfect sinusoidal mains input voltage, the output ripple will have a 100Hz sine wave ripple, having an amplitude that is dependent on the transferred power and the value of the PFC output capacitance.

The controllable power factor correction circuit may be configured to adjust a minimum value of the PFC output voltage in accordance with the headroom control signal. Adjusting the minimum value of the PFC output voltage can account for any changes in the amplitude of any ripple component of the PFC output voltage. The ripple in the PFC output voltage may vary over time as an output capacitor associated with the PFC degrades, and therefore any degradation in the output capacitor may not significantly effect operation of the driver circuit, or at least any negative effects caused by degradation of the output capacitor may be reduced when compared with the prior art.

In other embodiments, the controllable power factor correction circuit may be configured to adjust a maximum or average value of the PFC output voltage.

The power factor correction circuit may be further configured to adjust a ripple component of the PFC output voltage such that the amplitude of the ripple is less than the ripple in case of a corresponding sinusoidal waveform. The power factor correction circuit may be configured to adjust a ripple component of the PFC output voltage such that it has a minimum amplitude whilst still satisfying one or more regulatory standards. Reducing the amplitude of the ripple component can further increase the efficiency of the driver circuit. Ripple voltages that are not sinusoidal are known from the prior art.

The controllable power factor correction circuit may be known as an active power factor correction circuit. The controllable power factor correction circuit may be a switched mode power supply.

The driver circuit may further comprise a buffer/output capacitor coupled between the outputs of the controllable power factor correction circuit. The buffer capacitor may be used to smooth the PFC output voltage.

The controllable power factor correction circuit may be selected from the group comprising: a Boost converter; a Buck converter; a Buck-Boost converter; a flyback converter; a forward converter, a Cuk converter, a Sepic converter, or any other active PFC unit which may be capable of fulfilling regulations in relation to lighting systems in the future. Furthermore the resonant and quasi-resonant PFC-topologies can be used according to some embodiments of the invention. Any converter suited for PFC can be used with embodiments of the invention.

The linear regulator may be a series regulator, especially a low-drop linear regulator or a linear shunt regulator.

There may be provided a lighting system comprising:
one or more light emitting diodes; and
any driver circuit disclosed herein, wherein the LED driver output is provided as a voltage and/or current source to the one or more light emitting diodes.

The lighting system may further comprise:
one or more further sets of light emitting diodes; and
any driver circuit as disclosed herein associated with each of the one or more further sets of light emitting diodes, wherein the LED driver voltage of each driver circuit is provided as a voltage and/or current source to the associated set of light emitting diodes.

The one or more further sets of lighting diodes may each comprise one or more light emitting diodes, which may be referred to as LED strings. In this way, a plurality of LED strings can be provided, where each LED string is powered by its own linear driver.

According to a further aspect of the invention, there is provided a method of operating a driver circuit for one or more light emitting diodes, the method comprising:
receiving a rectified alternating voltage at a controllable power factor correction circuit and generating a PFC output voltage;
receiving the PFC output voltage and a current mode control signal at a linear regulator and generating an LED driver output voltage with a substantially constant current in accordance with the current mode control signal;
generating a headroom control signal representative of an excess voltage; and
receiving the headroom control signal and adjusting one or more parameters of the power factor correction circuit in accordance with the headroom control signal in order to adjust the PFC output voltage.

The excess voltage may comprise:
the amount of the LED driver output voltage that is not used by the one or more light emitting diodes; or
the difference between the PFC output voltage and the LED driver output voltage; or
the sum of an offset voltage representative of a minimum headroom and the LED driver output voltage.

An embodiment of the invention may be provided by an integrated circuit (IC).

There may be provided a computer program, which when run on a computer, causes the computer to configure any apparatus, including a driver component, circuit or system, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium such as a disc or a memory device, or may be embodied as a transient signal. Such a transient signal may be a network download, including an internet download.

A description is now given, by way of example only, with reference to the accompanying drawings, in which:
Figure 1 shows a prior art driver circuit for one or more light emitting diodes;
Figure 2 shows another prior art driver circuit for one or more light emitting diodes;
Figure 3 shows a prior art DC-DC power supply unit;
Figure 4 illustrates another prior art DC-DC power supply unit;
Figure 5 illustrates graphically use of a prior art driver circuit;
Figure 6 illustrates a driver circuit according to an embodiment of the invention;
Figure 7 illustrates graphically use of a driver circuit according to an embodiment of the invention;
Figure 8 illustrates graphically use of alternative driver circuits according to embodiments of the invention;
Figure 9 illustrates graphically use of a driver circuit according to a further still embodiment of the invention;
Figure 10 illustrates a driver circuit according to an embodiment of the invention;
Figure 11 illustrates a driver circuit according to another embodiment of the invention; and
Figure 12 illustrates a driver circuit according to a further still embodiment of the invention.

One or more embodiments described herein use a controllable power factor correction circuit (PFC) having one or more adjustable parameters that can be configured to adjust the output voltage of the PFC in order to keep a headroom voltage as close as possible to the minimum headroom voltage that is required for correct operation of the linear regulator. The controllable PFC may also be referred to as an active PFC. The PFC can be used in combination with a linear regulator that receives the PFC output voltage. The linear regulator is typically configured as a current source and generates a LED driver voltage with a substantially constant current in accordance with a current mode control signal.

Embodiments of the invention can provide an efficient driver circuit for one or more light emitting diodes (LEDs) as switching characteristics of a PFC can be adjusted automatically such that unnecessary headroom voltage can be reduced/avoided whilst still providing the one or more LEDs with a constant current. Providing the LEDs with a constant current can provide a uniform light output.

It will be appreciated that one or more embodiments described herein can enable the headroom voltage to be reduced when compared with the prior art such that any variation in component values, for example variations in properties of the one or more LEDs and variations in a bulk output capacitor, can be automatically accounted for when determining an appropriate output voltage level for the PFC.

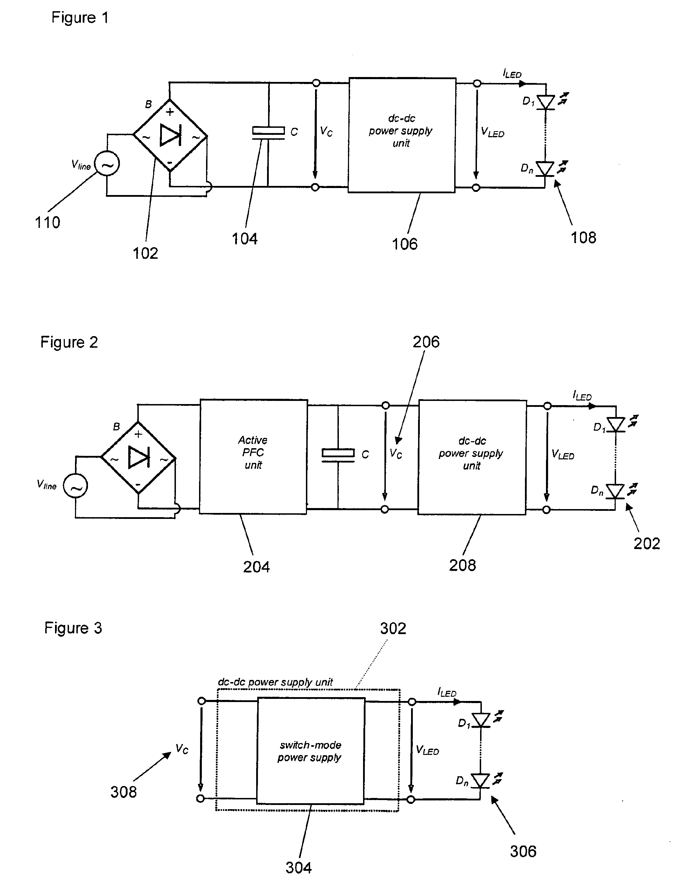

Several methods are known to generate a DC voltage from a received AC mains supply. A traditional approach is shown as Figure 1, and uses a bridge rectifier 102 to rectify a voltage received from a voltage line source 110. The circuit of Figure 1 includes a large electrolytic capacitor 104 across the outputs of the rectifier 102. As the capacitor voltage exhibits a quite large ripple, an additional DC-DC power supply unit 106 is used to deliver a constant current to the one or more LEDs 108.

A disadvantage of the circuit shown as Figure 1 is that a heavily distorted current is drawn from the voltage line source 110. As the capacitor is only charged at high voltages, the input current contains higher harmonics of the line frequency, which may be 50 Hz for example. In some embodiments it may be beneficial to restrict the harmonics of the line current, which may be required to satisfy one or more future regulations. Commercial programs are already known, for example the ENERGY STAR® program, which requires a minimum power factor of greater than 0.7 for LED lamp fixtures.

Figure 2 illustrates another prior art circuit diagram of a driver circuit for one or more LEDs 202. The circuit diagram of Figure 2 uses an active power factor correction (PFC) unit 204 that produces a PFC output voltage V_{C} 206. The PFC output voltage 206 includes a superimposed ripple voltage, and is provided to a subsequent DC-DC power supply 208 for delivering a DC current to the LEDs 202.

Figure 3 shows a prior art DC-DC power supply unit 302. The DC-DC power supply unit 302 comprises a switch-mode power supply (SMPS) 304 to generate a constant current for supplying to one or more LEDs 306. The efficiency of the SMPS 304 can be relatively high, and the input voltage V_{C} 308 to the SMPS 304 can be allowed to vary within certain limits without considerably decreasing the efficiency of the DC-DC power supply unit 302.

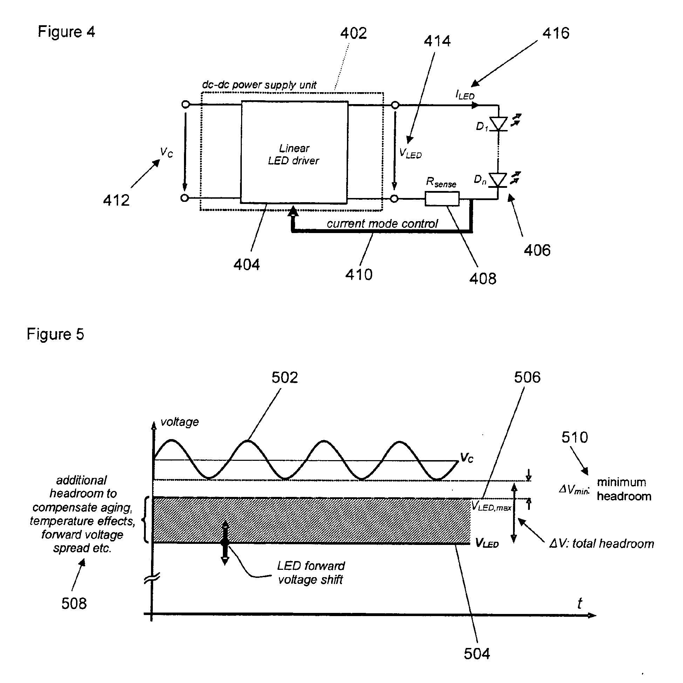

Figure 4 shows another prior art DC-DC power supply unit 402. The DC-DC power supply unit 402 includes a linear LED driver 404 that regulates the output voltage of the linear LED driver 404 such that a constant current is provided to the LEDs 406. The current through the LEDs 406 can be measured through a resistor Rₛₑₙₛₑ 408 that is provided in series with the LEDs 406. The linear LED driver 404 is regulated in accordance with a current mode control signal 410 in order to ensure that a constant current is flowing through the LEDs 406.

The linear LED driver 404 of Figure 4 has a number of advantages when compared with the dc-dc power supply unit 302 of Fig. 3 including the provision of a less complicated and much cheaper component/system. Furthermore, the linear LED driver 404 generates less problems with respect to electromagnetic compatibility (EMC). However, the linear LED driver 404 can have a poor efficiency when provided with a varying input voltage V_{C} 412 or varying LED characteristics. The poor efficiency can be caused by the overhead/headroom voltage that is necessary to be able to control the output voltage V_{LED} 414 and output current I_{LED} 416. It may not be possible to decrease the overhead voltage arbitrarily as the headroom voltage should be large enough so that sufficient voltage and current is supplied to the LEDs 406 irrespective of any variations in the input voltage V_{C} 412 to the linear LED driver 404, and irrespective of any variations in the load experienced by the linear LED driver 404. It will be appreciated that variations in the load on the linear LED driver 404 can be caused by variations in the characteristics of the one or more LEDs 406, for example variations during fabrication or variations in the environment of the LEDs 406 such as temperature effects.

The output voltage of the linear driver/regulator 404 should be chosen so that it is high enough in order to be able to generate a constant current for different LED forward voltages. This can be considered as important, as the LED forward voltage can shift due to different operating conditions including different temperatures, voltage shifts due to aging etc. and can also be different due to production tolerances. Thus, the voltage level at the input of the linear driver 404 should actually exhibit a large headroom so that the linear driver 404 is able to react to any operation condition.

Figure 5 illustrates graphically use of a prior art linear driver circuit for use with a PFC supplying one or more light emitting diodes. Voltage is shown on the vertical axis, and time is shown on the horizontal axis.

The output voltage V_{C} 502 of the PFC unit that is provided to a prior art DC-DC power supply unit is shown at the top of the graph. It will be appreciated that the voltage V_{C} 502 has a nearly sinusoidal ripple due the nature of PFC circuits, as disclosed above.

Shown at the bottom of the graph with reference 504 is a straight line indicative of the actual voltage that is used by the one or more LEDs. This line is labelled V_{LED} 504. Also shown on Figure 5 with reference 506 is the maximum voltage that can be expected to be required by the one or more LEDs at extreme operating conditions/parameter values. This line is labelled V_{LED},ₘₐₓ 506 and can be considered as a worst-case scenario as to the voltage that may be required by the one or more LEDs.

The voltage difference between the actual voltage that is used by the LEDs V_{LED} 504 and the maximum possible voltage that may be required by the LEDs V_{LED,max} 506 is known as the additional headroom 508, and is necessary to compensate for ageing, temperature effects, forward voltage spread, and other known variables that can effect the voltage that is required by the LEDs.

In addition to the headroom 508 that compensates for variations in the components, a further minimum headroom Δ Vₘᵢₙ 510 is required for correct operation of the linear regulator. The minimum headroom 510 is required to ensure that there is sufficient voltage to operate the linear regulator, which in turn ensures that the linear regulator guarantees a constant output voltage and/or constant output current.

In order to ensure correct operation for the total system over its lifetime, variations in each of the temperature, LED-variation, aging of PFC output capacitor, etc, characteristics of the prior art circuits have to be accounted for when setting the output voltage V_{C} 502 of the PFC circuit. The output voltage V_{C} 502 has to be regulated to a high enough average voltage level to account for all variations, and this fixed DC voltage level must guarantee that its minimum voltage is always greater than the sum of V_{LED},ₘₐₓ 506 and ΔVₘᵢₙ 510.

According to the prior art, the output voltage of the PFC stage is fixed by the design of the PFC-stage. This fixed voltage must account for all possible voltage variations of the LEDs and the minimum headroom voltage of the linear regulator. Thus, this fixed voltage is at least greater than the sum of the maximum LED-voltage V_{LED},ₘₐₓ and minimum headroom ΔVₘᵢₙ. Furthermore, the fixed output voltage has to account for a loss in capacitance due to ageing responsible for an even lower minimum voltage of the PFC stage. Thus, the fixed voltage has to be set even higher.

If the actual operating voltage of the LEDs is not at its assumed maximum value V_{LED},ₘₐₓ 506 then the additional headroom voltage 508 is not used to power the LEDs, and therefore results in power losses. It can be seen that for applications when the voltage used by an LED is not at its maximum value, then high losses occur and a poor efficiency results.

Embodiments of the invention can provide a system with improved efficiency over the prior art, and in particular can provide linear drivers where the headroom can be made smaller than is possible with the prior art. Such an implementation requires an adaptable input voltage for the linear driver to attune the input voltage to specific operating conditions. Embodiments of the invention can be seen to employ linear LED drivers in combination with a method to generate an adaptable input voltage to be attuned by an active PFC unit.

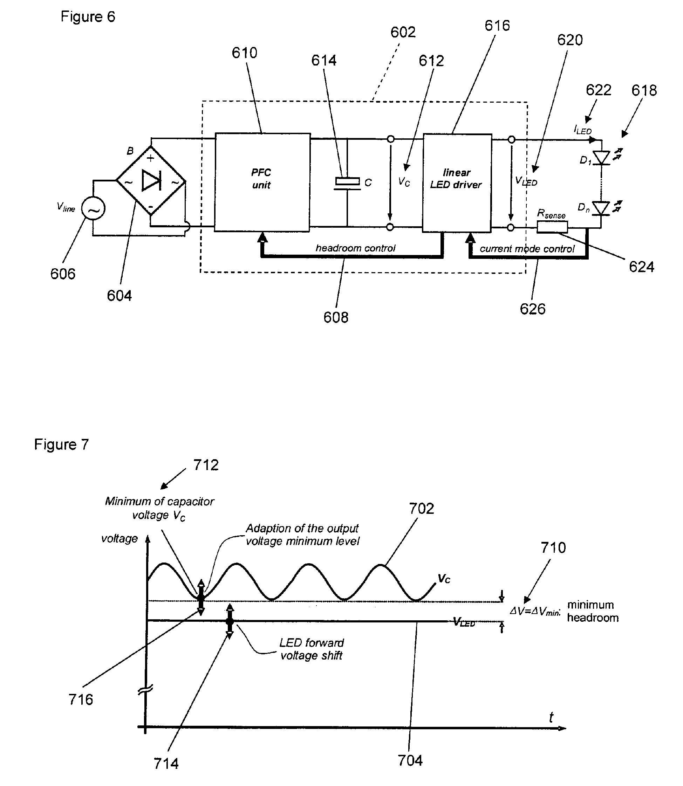

Figure 6 illustrates a driver circuit 602 according to an embodiment of the invention. The driver circuit 602 receives a rectified alternating voltage from a bridge rectifier circuit 604, which in turn receives an alternating voltage from a line supply 606, such as a mains voltage supply.

The alternating voltage received from the bridge rectifier 604 is provided to a controllable power factor correction (PFC) unit 610. The PFC unit 610 receives a headroom control signal 608 in order to control the output voltage of the PFC unit 610 as described in more detail below.

The output of the PFC unit 610 is PFC output voltage V_{C} 612 and is provided across an output buffering capacitor 614. In this embodiment, the output capacitor 614 is typically an electrolytic capacitor.

The PFC output voltage V_{C} 612 is provided as an input to a linear LED driver/regulator component 616. Linear LED drivers 616 that could be used, are known in the art. The linear LED driver 616 in this example is a low-drop linear regulator. It will also be appreciated that either linear shunt regulators or series regulators as described in the art can be used.

The linear LED driver 616 generates an LED driver voltage V_{LED} 620 that is used to provide voltage or current to the one or more LEDs 618. The current flowing through the LEDs is shown in Figure 6 with reference 622.

Coupled to the outputs of the linear LED driver 616 are the one or more LEDs 618 and resistor Rₛₑₙₛₑ 624. The resistor 624 is used to measure the current that flows through the LEDs 618. The LEDs 618 and resistor 624 may be considered as the load of the linear LED driver 616.

A feedback signal, which in this embodiment is called a current mode control signal 626, is provided from the load to the linear LED driver 616. The linear LED driver 616 adjusts the output voltage 620 and thereby the current 622 in accordance with the current mode control signal 626 in order to provide a constant DC current 622. Examples of how the current mode control signal 626 can regulate the linear LED driver 616 are known in the art. As discussed above, the light output of the LEDs 618 is better when they are provided with a DC current.

The LED driver 616 adjusts its output voltage in order to regulate the DC current through the LEDs determined by the measurement resistor 624. This adjustment of the LED driver output voltage might cause a change in the headroom of the linear driver. The outer headroom control must ensure the existence of a minimum headroom ΔVₘᵢₙ (shown as reference 710 in Figure 7) for a correct operation of the circuit.

In this embodiment the linear LED driver 616 can also be considered as a headroom control component as it also generates the headroom control signal 608 to provide the outer headroom control. The headroom control signal 608 is representative of a difference between the input voltage V_{C} 612 to the linear LED driver 616 and the output voltage V_{LED} 620 of the linear LED driver 616. This voltage difference may be considered as an excess voltage or the headroom voltage.

Two embodiments of the invention include using known LED-drivers and additionally either: 1) where the headroom control is provided as an additional circuit, which can be either discrete or integrated; or 2) extending the functionality of existing linear drivers IC for headroom control, such as the embodiment shown as Figure 6. It will be appreciated that extending the functionality of a linear driver IC can provide an advantage as the total number of components does not need to be increased.

The headroom control signal 608 is generated such that, when provided to the PFC unit 610, the voltage V_{C} 612 provided from the PFC unit 610 to the linear LED driver 616 is automatically adjusted. In this example, excess voltage is set a specific value that corresponds to the voltage required by the linear driver 616 to operate correctly, or at least may be considered as tending towards the specific value.

In other embodiments, the "excess voltage" may be adjusted such that it exceeds a minimum threshold value, such as the minimum headroom Δ V required to power the linear LED driver 616. In contrast to the prior art, the minimum headroom voltage does not need to take into account potential variations in component values and operating conditions because the specific use conditions are taken into account by the feedback signals 626, 608 when determining the output voltage V_{C} 612 of the PFC unit 610.

In some embodiments, the excess voltage may also be controlled by the PFC unit 610 such that it is less than a maximum threshold value. The maximum threshold value may be representative of a voltage level above which the driver circuit is considered inefficient. Use of a maximum and minimum threshold value together can enable the excess voltage to be kept at an acceptable level without requiring undue adjustment of parameters of the PFC unit 610 in order to change the PFC output voltage V_{C} 612.

It will be appreciated that the PFC output voltage V_{C} 612, and hence the excess voltage, can be adjusted by varying a switching frequency, on-time, off-time, duty cycle and/or peak current value of a switch within the PFC unit 610.

The sum of the required voltage for the LED string 618 and the operating/headroom voltage of the linear LED driver 616 has to be lower than the minimum output voltage of the PFC stage 610, including the PFC stage's 610 inherent ripple.

Use of the driver circuit 602 of Figure 6 is shown graphically as Figure 7. The graph of Figure 7 has a similar layout to the graph of Figure 5, and corresponding features are given the same reference numbers in the 700 series.

The voltage V_{C} that is provided as an input to the linear LED driver 616 of Figure 6 is shown with reference 702 in Figure 7. In the same way as shown in Figure 5, the voltage V_{C} 702 includes a ripple voltage. The voltage that is used by the one or more LEDs is shown in Figure 7 as voltage V_{LED} 704 and represents the actual output of the linear LED driver that is used by the LEDs.

A minimum headroom Δₘᵢₙ 710 is shown between the minimum level of the linear LED driver input voltage V_{C} 702 and the linear LED driver output voltage V_{LED} 704, and this minimum headroom Vₘᵢₙ 710 represents the voltage that is required by the linear LED driver to operate correctly.

In contrast to the graph of Figure 5, an additional headroom voltage to compensate for ageing, temperature effects, forward voltage spread, etc., (reference 508 in Figure 5) is not required. This is because the feedback signals to the PFC unit that provides the linear LED driver input voltage V_{C} 702 is controlled in accordance with the actual voltage that is consumed by the LEDs V_{LED} 704, rather than a worst case scenario.

It will be evident from a comparison of the graphs of Figure 5 and Figure 7 that embodiments of the invention enable a more power efficient, and therefore more economical, driver circuit to be provided according to one or more embodiments of the invention as less excess voltage is needed and thus less energy is wasted.

As shown in Figures 6 and 7, the minimum voltage level of the PFC unit 610 output voltage V_{C} 612; 702 is regulated with reference to the voltage level of the LED string 618 so that only a minimum overhead Δ Vₘᵢₙ 710 is applied to the linear LED driver/regulator 616. In this way, the minimum level of the output voltage V_{C} 612; 702 of the PFC unit 610 can be dictated so that the difference between the minimum voltage of V_{C} 612; 702 and the LED string voltage V_{LED} 620; 704 corresponds to the minimum required headroom voltage 710 of the linear LED driver 616. Therefore, an improved and/or optimal efficiency of the linear LED driver 616 can be achieved.

Controlling the minimum value of the output voltage V_{C} 612; 702 of the PFC unit 610 has another advantage that has not been considered before. That is, any ageing effect on the output capacitor 614, and any corresponding reduction of the effective capacitance value of the output capacitor 614 is automatically compensated. Regulating the minimum value of the output voltage V_{C} 612; 702 of the PFC unit 610 as discussed above can ensure that the amplitude of the ripple voltage generated by the PFC unit 610 does not effect operation of the LEDs 618. The amplitude of the ripple voltage can depend upon the capacitance value of the output capacitor 614. That is, the amplitude of the ripple component of the voltage V_{C} 612; 702 does not detract from the minimum headroom 710 that is required, and therefore does not detract from the voltage V_{LED} 620; 704 that is required by the LEDs 618. It will be appreciated that variations of the capacitor 614 due to ageing can play an important role in LED lighting devices, and the lifetime of the capacitor 614 can be the lifetime limiting factor in LED lamps, especially because of high temperatures that occur as a consequence of LED power dissipation. Therefore, reducing the reliance on the capacitance value of the output capacitor 614 for successful operation of the driver circuit can be advantageous, and can extend the working life of an LED lighting system.

As shown in Figure 7, the minimum value 712 of the input voltage to the linear LED driver V_{C} 702 is automatically controlled over time, and this is illustrated schematically with arrows 716 in Figure 7. Similarly, the output voltage of the linear LED driver V_{LED} 704 can also change over time, for example as component values drift/change, and operating conditions change, and this is shown schematically with arrows 714 in Figure 7. According to this embodiment of the headroom control, the changes in the minimum voltage 712 and the LED driver output voltage 704 are moving in parallel maintaining the optimal, minimum headroom 710.

Therefore, the output voltage of the PFC circuit V_{C} 702 can be regulated to a fixed DC voltage level so that its minimum voltage due to ripple is greater than the sum of the instantaneous LED-voltage V_{LED} 704 and minimum headroom Δ Vₘᵢₙ 710. It will be appreciated that this sum can represent the minimum headroom that is required to ensure successful operation of the LEDs.

It will be appreciated that such embodiments can enable continued operation of the LED driver circuit as the output capacitor degrades, and this may not have been possible according to prior art circuits.

In other embodiments, a plurality of parallel LED strings, possibly with a ballasting resistor per LED string can be used. Furthermore, a plurality of LED strings, each with its own linear regulator can be used wherein a separate headroom control signal can be provided by each linear regulator. In such embodiments, a comparison circuit/component may be provided that receives a plurality of such headroom control signals and is configured to select and use the most critical headroom control signal so that all of the linear regulators can operate correctly. That is, the comparison circuit can identify a required minimum excess/headroom voltage that will enable all of the LED strings to operate correctly, and control the output voltage of the PFC circuit accordingly.

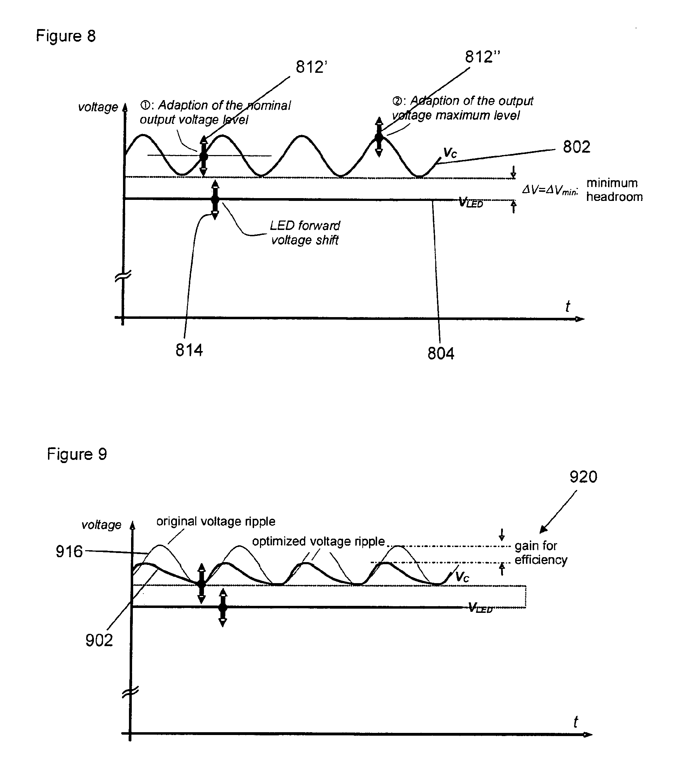

Figure 8 illustrates graphically use of a driver circuit according to an embodiment of the invention that is similar to the use illustrated in Figure 7. As discussed in relation to Figure 7, the actual voltage that is used by the LEDs V_{LED} 804 can vary over time, and the input voltage to the linear LED driver V_{C} 802 is automatically varied in accordance with the current/instantaneous voltage level V_{LED} 804.

A first embodiment illustrated by Figure 8 shows that the average value of the linear LED driver input voltage V_{C} 802 can be varied automatically in accordance with the output voltage V_{LED} 804. This is shown schematically with arrows 812' that illustrates how an average/nominal voltage level can be adjusted.

In some embodiments, the input voltage and output voltage of the linear driver are measured, and compared with each other, in order to obtain the actual headroom voltage. However, in further embodiments it may be sufficient to measure only the output voltage of the LED driver (V_{LED}) and add the minimum headroom as a constant offset as part of the PFC control. As discussed herein, the headroom control can be provided by an IC or discrete circuit. Such further embodiments may be suitable for use with embodiments where the average value of the linear LED driver input voltage (V_{C}) is varied.

A further embodiment illustrated by Figure 8 is one where the maximum level of the linear LED driver input voltage V_{C} 802 can be varied in accordance with the output voltage V_{LED} 804, and this embodiment is shown schematically with arrows 812" in Figure 8. In some examples, embodiments that control the maximum or average value of the linear LED driver input voltage V_{C} 802 can provide advantages in terms of implementation.

Other embodiments of the invention can relate to the control scheme of the power factor correction unit/stage itself. In addition to the low-bandwidth output voltage control loop discussed above, a fast input current controller may be necessary to provide the average input current that may be required to satisfy legal standards/requirements in the future. The approach described above and illustrated as Figure 7 for example, uses an active PFC stage to regulate the current such that the average current has a sinusoidal wave shape. However, embodiments of the invention should not be limited to having a sinusoidal ripple voltage component. Other control methods that can provide for a ripple voltage with other shapes and preferably a smaller amplitude. Implementations having a smaller ripple amplitude than a sinusoidal waveform can result in a smaller excess voltage, while still satisfying any legal standards. Therefore, more efficient and smaller sized products may be achievable.

In one embodiment, a PFC control integrated circuit (IC) can be programmed for optimum efficiency of the power stage, whereas the input current regulation may be provided so that it satisfies any legal standards/requirements.

A further embodiment provides an advanced control method to provide a reduced and/or minimum headroom voltage, and example use of such an embodiment is shown as Figure 9. As shown in Figure 9, the PFC output voltage V_{C} 902 consists of a ripple that has a lower amplitude than the sinusoidal ripple of Figure 8. A sinusoidal ripple is shown with reference 916 in Figure 9. The reduction in the amplitude of the ripple is shown as reference 920 and represents a further gain in efficiency. In some embodiments, the optimal voltage ripple level may be considered as one that provides the lowest amplitude in terms of voltage, yet satisfies any legal standards/requirements concerning the current drawn from the mains/line supply.

Embodiments of the invention can use a linear LED driver having an input voltage (output voltage of the PFC circuit) that is regulated according to the minimum required headroom voltage. An efficiency benefit arises because the linear driver IC adjusts its output voltage to the condition of the LED-string (part to part spread, temperature and aging dependent shift of the needed driving voltage in order to supply the LED-string with a constant current) and can use this information to minimize the excess voltage. The input voltage of the linear driver is varied by adapting the output voltage of the PFC stage. A PFC-stage is used in order to comply with possibly emerging restrictions concerning the current drawn from the line. As the level of its output voltage has to be adapted, no passive but only an active PFC-stage may be employed.

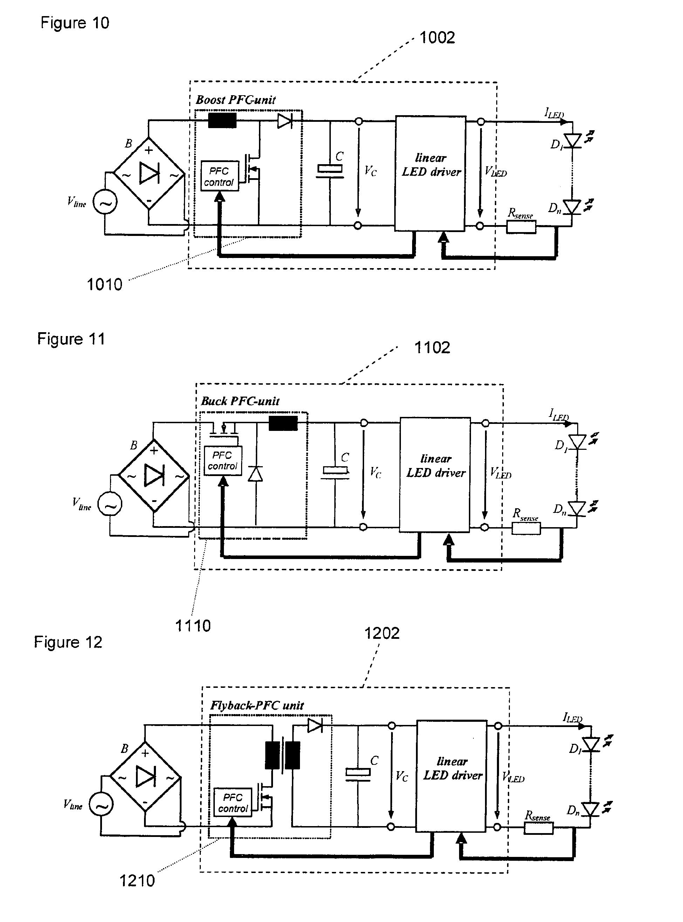

Figure 10 illustrates a further embodiment of a driver circuit 1002 according to an embodiment of the invention. In this embodiment, the PFC unit is a Boost converter 1010.

Figure 11 shows a further still embodiment of a driver circuit 1102 according to an embodiment of the invention, and in this embodiment the PFC unit is a Buck converter 1110.

A further still embodiment of the invention is shown as Figure 12, which shows a circuit diagram of a driver circuit 1202. In this embodiment, the PFC unit is a flyback converter 1210, and an advantage of such a PFC unit is that mains isolation is also provided.

It will be appreciated that one or more embodiments described herein can be applied to any power factor correction (PFC) converter. One or more embodiments can be used with LED lighting applications, including, for example, applications having a transformer. A PFC topology can enable any voltage level to be provided at the output.

Embodiments of the invention relate to AC/DC LED power supplies, and can provide for an optimum regulated power factor correction (PFC) circuit with a linear driver.

In order to provide uniform light output, and best luminous efficacy, LEDs may be driven with DC current for general illumination purposes. According to embodiments of the invention, the constant DC current can be generated by a linear LED driver which adapts its output voltage according to different operation conditions of the LEDs, as the forward voltage of the LEDs could shift due to temperature effects, ageing, forward voltage spread, etc., so that a constant current can be guaranteed.

A feature of embodiments of the invention is that the input voltage to the linear driver (which can be a rippling output voltage of a PFC circuit) is also adapted with reference to the variation of its output voltage in order to guarantee a minimum headroom voltage for improved/best efficiency. The headroom voltage, that is the difference between the linear driver's input and output voltage, can be necessary for being able to control the output current accurately.

The headroom control circuit, either provided separately or within the linear driver IC, can deliver the information about the required voltage level, that is the voltage across its driver stage, when the LED string is powered plus the required headroom to operate the linear driver, to the PFC control IC. In this way, the PFC stage can adapt its output voltage.

Embodiments described herein use a power factor correction (PFC) stage in the first instance to generate a DC voltage with a more or less large ripple. Using a PFC stage has the advantage that the current drawn from the mains is likely to comply with any standards which may emerge in the future as LED lighting is likely to claim a larger share of the market. It will be appreciated that due to the sinusoidal input voltage and a limited capacitance value at the output of the PFC stage, the output voltage of the PFC stage will have a more or less large ripple.

According to embodiments of the invention, an effective control method is proposed, which adapts the output voltage of the PFC-stage with reference to minimum headroom above the input voltage of the linear regulator. The required input voltage of the linear driver can therefore be adapted to the different operating conditions of the LEDs so that always only a minimum overhead is necessary and the efficiency of the linear driver and the overall lighting device can be increased/improved.

Furthermore using a switch-mode power supply as LED driver can result in higher costs when compared with a linear LED driver. Therefore, the idea of using a linear LED driver with an adaptable input voltage can reduce the costs considerably whilst providing a comparable efficiency to circuits that use a switch-mode power supply as LED driver.

## Claims

1. A driver circuit (602) for one or more light emitting diodes (618), the driver circuit (602) comprising:
a controllable power factor correction circuit (610) configured to receive a rectified alternating voltage and generate a PFC output voltage (612);
a linear regulator (616) configured to receive the PFC output voltage (612) and a current mode control signal (626), and generate an LED driver output voltage (620) with a substantially constant current in accordance with the current mode control signal (626); and
a headroom control component (616) configured to generate a headroom control signal (608) representative of an excess voltage;
wherein the controllable power factor correction circuit (610) is configured to receive the headroom control signal (608) and adjust one or more parameters of the power factor correction circuit (610) in accordance with the headroom control signal (608) in order to adjust the PFC output voltage (612).

2. The driver circuit of claim 1, wherein the excess voltage comprises:
the difference between the PFC output voltage (612) and the LED driver output voltage (620); or
the sum of an offset voltage representative of the minimum headroom (710) and the LED driver output voltage (620); or
the amount of the LED driver output voltage (620) that is not used by the one or more light emitting diodes (618).

3. The driver circuit of claim 1 or claim 2, wherein the headroom control component is provided by one or more of:
the linear regulator (616);
the controllable power factor correction circuit (610);
a headroom control integrated circuit; and
a discrete circuit.

4. The driver circuit of any preceding claim, wherein the controllable power factor correction circuit (610) is further configured to adjust one or more parameters of the power factor correction circuit (610) in accordance with the headroom control signal (608) in order to maintain the excess voltage above a minimum value.

5. The driver circuit of any one of claims 1 to 3, wherein the controllable power factor correction circuit (610) is further configured to adjust one or more parameters of the power factor correction circuit (610) in accordance with the headroom control signal (608) so that the excess voltage corresponds to a minimum headroom voltage of the linear regulator (616).

6. The driver circuit of any preceding claim, wherein the controllable power factor correction circuit (610) is configured to adjust the switching frequency, on-time, off-time, duty cycle and/or peak current value of the operation of its switch in accordance with the headroom control signal (608).

7. The driver circuit of any preceding claim, further comprising one or more light emitting diodes (618) connected to an output of the linear regulator (616); and wherein the current mode control signal (626) is representative of the current flowing through the light emitting diodes (618).

8. The driver circuit of claim 7, wherein the one or more light emitting diodes (618) comprise one or more light emitting diode strings.

9. The driver circuit of any preceding claim, wherein the power factor correction circuit (610) is further configured to adjust a ripple component of the PFC output voltage (612) such that the amplitude of the ripple is less than the ripple of a corresponding sinusoidal waveform.

10. The driver circuit of any preceding claim, wherein the controllable power factor correction circuit (610) is configured to adjust:
a minimum value of the PFC output voltage (612) in accordance with the headroom control signal (608);
an average value of the PFC output voltage (612) in accordance with the headroom control signal (608); or
a maximum value of the PFC output voltage (612) in accordance with the headroom control signal (608).

11. The driver circuit of any preceding claim, wherein the controllable power factor correction is a flyback converter (1210).

12. A lighting system comprising:
one or more light emitting diodes (618); and
the driver circuit (602) of any one of claims 1 to 12, wherein the LED driver voltage (620) is provided as a voltage and/or current source to the one or more light emitting diodes (618).

13. The lighting system of claim 12, further comprising:
one or more further sets of light emitting diodes (618); and
a driver circuit (602) of any one of claims 1 to 12 associated with each of the one or more further sets of light emitting diodes (618), wherein the LED driver voltage (620) of each driver circuit (602) is provided as a voltage and/or current source to the associated set of light emitting diodes (618).

14. A method of operating a driver circuit (602) for one or more light emitting diodes (618), the method comprising:
receiving a rectified alternating voltage at a controllable power factor correction circuit (610) and generating a PFC output voltage (612);
receiving the PFC output voltage (612) and a current mode control signal (626) at a linear regulator (616) and generating an LED driver output voltage (620) with a substantially constant current in accordance with the current mode control signal (626);
generating a headroom control signal (608) representative of an excess voltage; and
receiving the headroom control signal (608) and adjusting one or more parameters of the power factor correction circuit (610) in accordance with the headroom control signal (608) in order to adjust the PFC output voltage (612).

15. An integrated circuit comprising the driver circuit (602) of any of claims 1 to 12.
